# EUROPEAN PATENT APPLICATION

(11) **EP 0 921 059 A1**
(43) Date of publication of application: **09.06.1999**
(21) Application number: 98111897.9
(22) Date of filing: 26.06.1998
(51) Int. Cl.: B62J 15/02

(54) **A safety fixing seat structure for bicycle fender**

(30) Priority: 03.12.1997 DE 29721380 U
(71) Applicant: Huang, Kuei C., Shu-Lin Chen, Taipei (TW)
(72) Inventor: Huang, Kuei C., Shu-Lin Chen, Taipei (TW)
(74) Representative: Kador & Partner

(57) **Abstract**

A safety fixing seat structure for bicycle fender (30) in which the fixing seat (10) is formed with a transverse through hole (11) at bottom end for a wheel shaft to pass therethrough. A top end of the fixing seat (10) is formed with a longitudinal engaging socket (12). A lateral wall of the engaging socket is formed with an arch slot (16) communicating with the engaging socket (12). A latch section (13) is defined on upper side of the arch slot (16). The inner side of the latch section (13) is formed with a slope face (14). The lower side of the slope face (14) is formed with a projection (15). An engaging section (22) of the retainer (20) for retaining the fender (30) can be inserted into the engaging socket (12) and latched by the projection (15) so as to detachably engage the fender (30) with the fixing seat (10).

## Description

### BACKGROUND OF THE INVENTION

The present invention relates to a safety fixing seat structure for bicycle fender in which a top end of the fixing seat is formed with a longitudinal engaging socket. A lateral wall of the engaging socket is formed with an arch slot communicating with the engaging socket to define a latch section. A projection is formed in the engaging socket for latching an engaging section of a retainer inserted into the engaging socket so as to detachably engage the fender with the fixing seat.

It is known that during running, the wheels of a bicycle often entrain rain water or mud from the ground and then throw out the water or mud to contaminate a rider's clothes. Therefore, the upper sides of the front and rear wheels of the bicycle are disposed with fenders to solve the above problems.

The fender is secured on the bicycle frame in such a manner that two sides of the fender are riveted with free ends of V-shaped retainers at intervals. The bottom end of the retainer is formed with a ring hole for fixedly fitting with the wheel shaft of the wheel. Therefore, the inner side of the fender is spaced from the tire of the wheel by a fixed distance. In the case that mud blocks, rocks or tree branches are entrained by the tire and jammed between the fender and the tire, the alien articles will forcedly push the fender upward. Because the distance between the fender and the wheel cannot be changed, the fender is quite easy to be pushed and damaged by the rocks, mud blocks or tree branches. This may even lead to falling down of the rider.

German DE 44 26918 C2 discloses an improved fixing seat structure as shown in Figs. 6 and 7, in which the retainer 16 includes two support arms 18, 19 adjoining each other at a bight section 46 defining a fitting ring 21. The fixing seat structure includes a rectangular locking device 24 having two parallel plane faces 26 interconnected by a lateral wall 27. The locking device 24 is formed with a vertical insertion socket 31, whereby the interior of the locking device is formed with a clamping pocket 32. The lateral walls 34 of the clamping pocket 32 are disposed with two guide boards 43 having slope faces 44. Two leaf springs 35 are disposed beside the guide boards 43, extending from upper end 36 to lower end 37 of the socket 31 and spaced from the lateral walls 34. Each leaf spring 35 is formed with an arch section 39 having a cut face 38. The lowermost section of the locking device is formed with a fixing hole 45 for a screw to pass therethrough. The above structure is integrally formed.

The above fixing seat structure is quite complicated and it is difficult to manufacture such fixing seat structure so that the cost therefor is very high. Moreover, when assembled with the retainer 16, the arch section 39 has very thin thickness and poor mechanical strength so that after a long period of abrasion against the fitting ring 21, the retainer is subject to detach from the locking device. Especially, when riding the bicycle at high speed, the loosening of the retainer often results in injury of the rider.

### SUMMARY OF THE INVENTION

It is a primary object of the present invention to provide a safety fixing seat structure for bicycle fender in which a bottom end of the fixing seat is formed with a through hole for fixing with the wheel shaft, while a top end of the fixing seat is formed with a longitudinal engaging socket. A projection is formed in the engaging socket for latching an engaging section of a retainer inserted into the engaging socket so as to detachably engage the fender with the fixing seat.

It is a further object of the present invention to provide the above fixing seat structure in which a lateral wall of the engaging socket is formed with an arch slot communicating with the engaging socket, whereby the latch section is provided with a certain resilience.

The present invention can be best understood through the following description and accompanying drawings, wherein:

### BRIEF DESCRIPTION OF THE DRAWINGS

Fig. 1 is a perspective view showing that the fixing seat structure of the present invention is mounted on a bicycle and connected with a fender;
Fig. 2 is a perspective exploded view of the retainer and the fixing seat of the present invention;
Fig. 3 is a perspective view of the fixing seat of the present invention;
Fig, 4 is a partially sectional perspective view of the fixing seat of the present invention;
Fig. 5 is a partially sectional plane view showing the engagement between the retainer and the fixing seat of the present invention; and

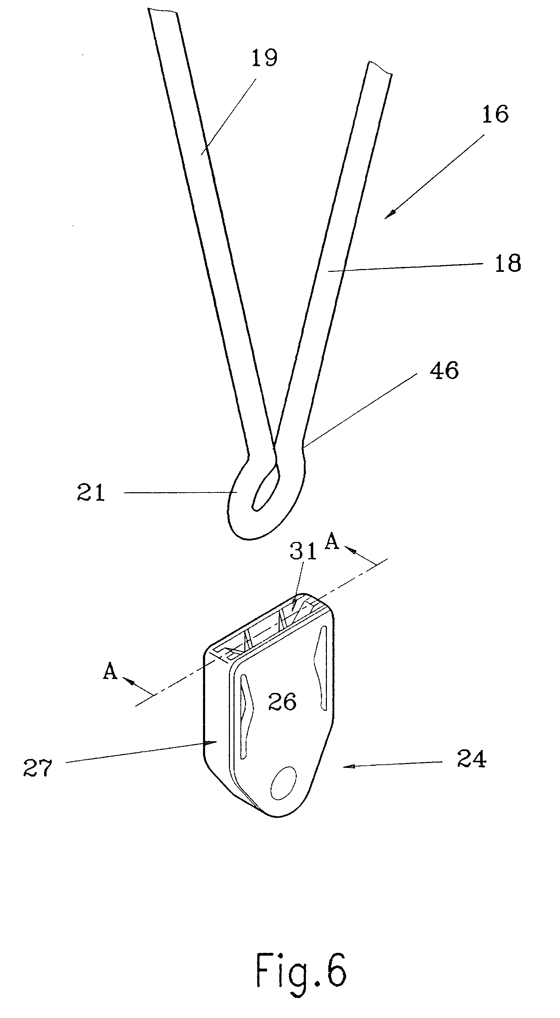

Fig. 6 shows a conventional fixing seat structure for bicycle fender; and

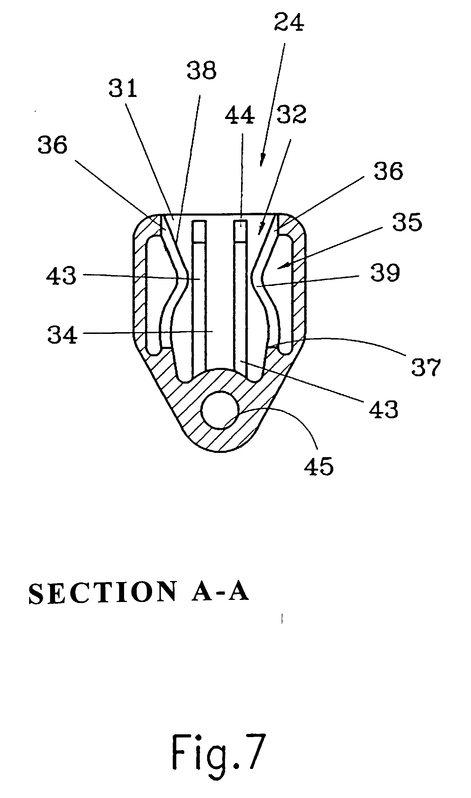

Fig. 7 is a sectional view taken along line A-A of Fig. 6.

### DETAILED DESCRIPTION OF THE PREFERRED EMBODIMENT

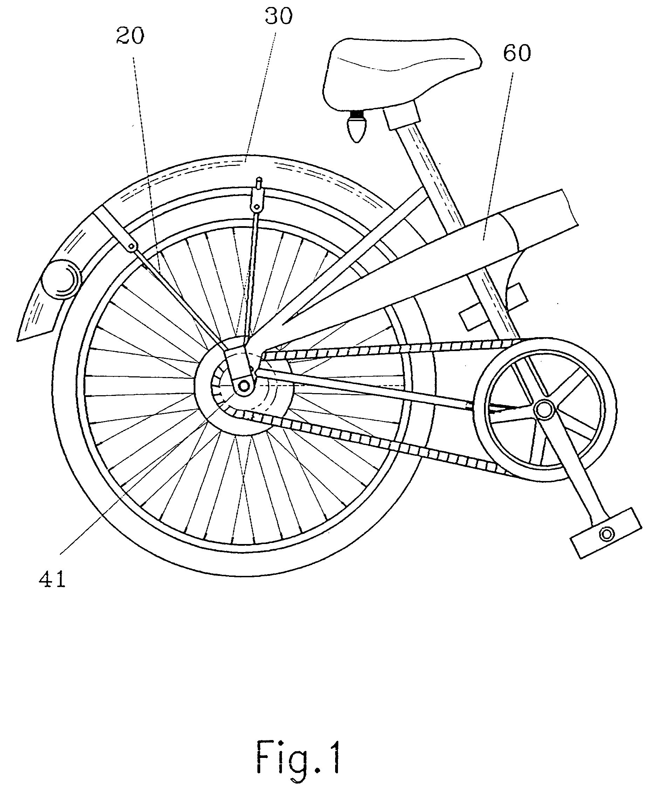

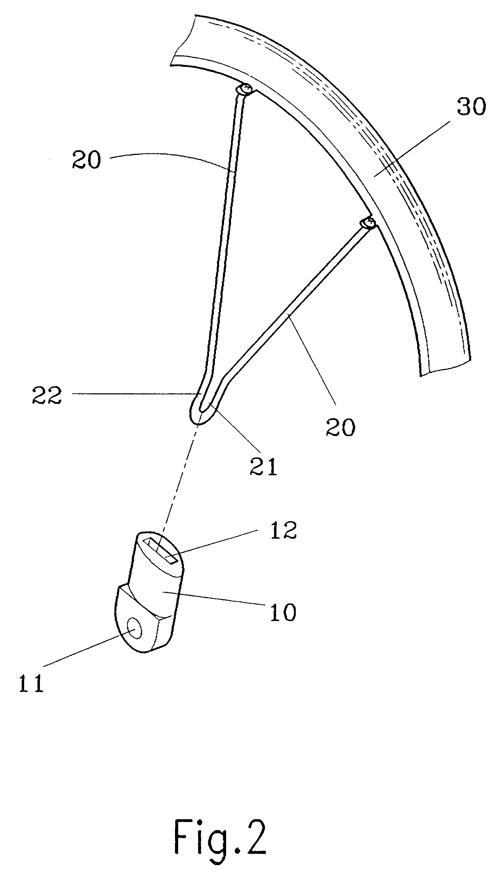

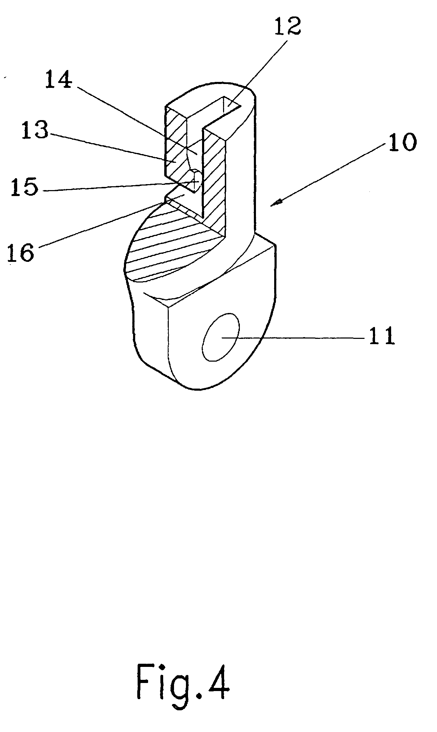

Please refer to Figs. 1 to 4. The fender fixing seat 10 of the present invention is formed with a transverse through hole 11 at bottom end. The top end of the fixing seat 10 is formed with a longitudinal engaging socket 12. A lateral wall of the engaging socket 12 is formed with a substantially semicircular arch slot 16 communicating with the engaging socket 12. A latch section 13 is defined on upper side of the arch slot 16. The inner side of the latch section 13 is formed with a slope face 14. The lower side of the slope face 14 is formed with a circular projection 15, whereby the latch section 13 has a certain resilience.

Referring to Figs, 1 and 2, in actual use, a screw is passed through the through hole 11 of the fixing seat 10 so as to secure the fixing seat on a wheel shaft 41 of the wheel supported by the bicycle frame 40. The engaging socket 12 of the fixing seat 10 is adjusted to face the fender 30. The lateral sides of the fender 30 are secured with free ends of V-shaped retainers 20 by rivets arranged at intervals. A bight end of the retainer 20 is bent to form two parallel engaging sections 22 defining a latch hole 21.

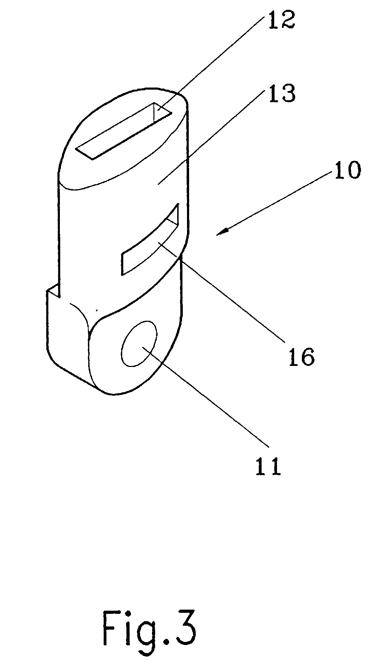

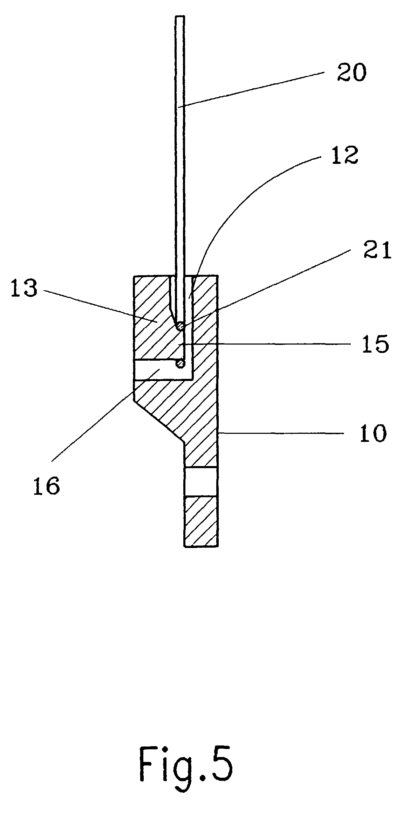

Referring to Figs. 3 to 5, the engaging sections 22 of the retainer 20 is directly inserted into the engaging socket 12 of the fixing seat 10 in such a manner that the engaging sections 22 first push the slope face 14 and projection 15 on the inner side of the latch section 13 so as to move the same outward by a certain distance. Then the engaging sections 22 go inside the engaging socket with the projection 15 latched in the latch hole 21. At this time, the retainer 20 is engaged with the fixing seat 10.

In the case that mud blocks, rocks or tree branches are entrained by the tire and jammed between the fender 30 and the tire, the alien articles will forcedly push the fender 30 upward. Because the engaging sections 22 of the retainer 20 are forcedly detachably engaged with the fixing seat 10, in case the pushing force is greater than the engaging force, the projection 15 of the latch section 13 will be separated from the latch hole 21 of the engaging sections 22. Therefore, the fender 30 is prevented from being pressed and damaged by the alien articles and the rider is protected from being stuck and falling down from the bicycle.

After the retainer 20 of the fender 30 is separated from the fixing seat 10 by external force, the user only needs to re-insert the engaging sections 22 of the retainer 20 into the engaging socket 12 of the fixing seat 10 with the projection 15 latched in the latch hole 21. Therefore, the assembly can be easily and quickly performed and the latch section 13 and the projection 15 are more anti-abrasion. Therefore, the retainer is not subject to unexpected detachment from the fixing seat due to abrasion.

It should be noted that the above description and accompanying drawings are only used to illustrate one embodiment of the present invention, not intended to limit the scope thereof. Any modification of the embodiment should fall within the scope of the present invention.

## Claims

1. A safety fixing seat structure for bicycle fender, comprising V-shaped retainers riveted with the fender and a fixing seat secured on a wheel shaft, wherein a bottom end of the fixing seat is formed with a through hole in alignment with the wheel shaft for securing the fixing seat thereon, a top end of the fixing seat being formed with a longitudinal engaging socket, a lateral wall of the engaging socket being formed with a substantially semicircular arch slot communicating with the engaging socket, a latch section being defined on upper side of the arch slot, the retainer being inserted into the engaging socket to detachably engage the fender with the fixing seat.

2. A safety fixing seat as claimed in claim 1, wherein a bight end of the retainer is bent to form two parallel engaging sections.

3. A safety fixing seat as claimed in claim 1 or 2. wherein the engaging sections define a latch hole.

4. A safety fixing seat as claimed in claim 1, wherein an inner side of the latch section of the fixing seat is formed with a slope face.

5. A safety fixing seat as claimed in claim 1 or 4, wherein a circular projection is formed on lower side of the slope face.
